# EUROPÄISCHE PATENTSCHRIFT

(11) **EP 3 710 752 B1**
(45) Veröffentlichungstag und Bekanntmachung des Hinweises auf die Patenterteilung: **11.01.2023**
(21) Anmeldenummer: 18807715.0
(22) Anmeldetag: 09.11.2018
(51) Int. Cl.: F24C 7/08

(54) **LEBENSMITTELZUBEREITUNGSSYSTEM**
FOOD PREPARATION SYSTEM
SYSTÈME DE PRÉPARATION D'ALIMENT

(30) Priorität: 15.11.2017 ES 201731327
(43) Veröffentlichungstag der Anmeldung: 23.09.2020
(73) Patentinhaber: BSH Hausgeräte GmbH, 81739 München (DE)
(72) Erfinder: FRANCO GUTIERREZ, Carlos, 50017 Zaragoza (ES); MARZO ALVAREZ, Teresa Del Carmen, 50006 Zaragoza (ES); PAESA GARCIA, David, 50015 Zaragoza (ES); PARRA BORDERÍAS, Maria, 50006 Zaragoza (ES); RODRIGUEZ LARROSA, Agostina, 50011 Zaragoza (ES); VILLANUEVA VALERO, Beatriz, 50011 Zaragoza (ES)
(86) Internationale Anmeldenummer: PCT/IB2018/058821
(87) Internationale Veröffentlichungsnummer: WO 2019/097375

(56) Entgegenhaltungen:
- EP-A1- 2 989 940
- EP-A2- 1 882 886
- WO-A1-2015/135031
- DE-A1-102009 000 652
- DE-A1-102010 039 072
- DE-A1-102015 103 380
- US-A1- 2009 259 689
- US-A1- 2014 263 640
- US-A1- 2016 081 515
- N N: "Beantwortet - - Schritte überspringen beim TM 5", , 17. Oktober 2016 (2016-10-17), XP055547149, Gefunden im Internet: URL:https://www.wunderkessel.de/t/schritte -ueberspringen-beim-tm-5.120994/ [gefunden am 2019-01-24]

## Beschreibung

Die Erfindung betrifft ein Lebensmittelzubereitungssystem nach Anspruch 1.

Aus der internationalen Patentanmeldung WO 2016/7162766 A1 ist bereits ein Lebensmittelzubereitungssystem bekannt, welches eine Ausgabeeinheit und ein als Kochfeld ausgebildetes Haushaltsgerät aufweist. Das Haushaltsgerät weist die Ausgabeeinheit und eine Steuereinheit auf. In einem Betriebszustand führt die Steuereinheit in Abhängigkeit einer Bedieneingabe einen Bediener über die Ausgabeeinheit durch ein von dem Bediener ausgewähltes Rezept. Das Rezept umfasst lediglich Rezeptschritte, welche mit dem als Kochfeld ausgebildeten Haushaltsgerät ausführbar sind, also insbesondere Heizschritte verschiedener Temperaturen. Das Rezept ist frei von Lebensmittelvorbereitungsschritten, und zwar insbesondere von solchen Lebensmittelvorbereitungsschritten, welche ausschließlich mittels einer von dem Kochfeld verschiedenen Funktionseinheit ausführbar sind.

Insbesondere offenbart die Druckschrift WO 2015/135031 A1 ein Lebensmittelzubereitungssystem mit zumindest einem Haushaltsgerät und einer mobilen Steuereinheit zur Führung durch ein Rezept.

Ferner ist aus der Druckschrift DE 10 2015 103380 A1 ein Verfahren zur Zubereitung von Speisen bekannt, wobei sich diese Druckschrift auf das Auslesen von Wägesensoren, und zwar einem gleichzeitigen Auslesen von zumindest zwei Wägesensoren fokussiert, um gleichzeitig mehrere, zumindest zwei, Speisen zuzubereiten.

Zudem offenbart die Druckschrift US 2016/081515 A1 ein System zur Steuerung einer automatisierten Kochvorrichtung (ACD), um einen intelligenten Kochprozess durchzuführen. Hierbei ist ein vorprogrammiertes Rezept der Kochvorrichtung von einem Benutzer auswählbar sowie daraufhin ein Kochvorgang startbar, welcher nach einer vordefinierten Zeit und/oder zu einer bestimmten Zeit startet und/oder abläuft.

Auch die Druckschrift US 2009/259689 A1 offenbart ein System zur Zubereitung von Lebensmitteln, fokussiert sich jedoch hierbei auf einen Ansatz zur Verwendung einer computergestützten interaktiven Anweisungsvorrichtung, die behinderten Personen, beispielsweise mit einer Hör- und/oder Sehbehinderung, interaktive Anweisungen zur Zubereitung von Rezepten bereitstellt.

Darüber hinaus ist aus der Druckschrift EP 1 882 886 A2 ein Verfahren zum Betrieb eines Haushaltsgeräts bekannt, mittels welchem für einen Bediener eine verbesserte Hilfestellung bei einer Zubereitung von aufwendigen Speisemenüs bereitgestellt wird, um insbesondere einen Planungsaufwand für den Bediener zu reduzieren. Hierbei ist mittels eines Dateneingabegeräts des Haushaltsgeräts ein gewünschter Zeitpunkt einer Fertigstellung einer zuzubereitenden Speise festlegbar. Des Weiteren ist eine Steuereinheit des Haushaltsgeräts dazu vorgesehen, bei Zubereitung zumindest der Speise zumindest eine Funktion des Haushaltsgeräts bei Erreichen eines definierten Zeitpunkts selbstständig und automatisch zu betätigen, wie beispielsweise das Erhitzen von Kochwasser, sodass heißes Wasser zum Start eines Kochens zumindest eines Lebensmittels verfügbar ist.

Außerdem ist aus der Druckschrift DE 10 2009 000 652 A1 eine portable medienfähige Konsole zur Anzeige und/oder Bearbeitung von Rezepten bekannt. Ferner offenbart die genannte Druckschrift, dass über die Konsole zumindest ein Haushaltsgerät mittels eines interaktiven Garprogramms zumindest teilweise bedienbar ist.

Die Aufgabe der Erfindung besteht insbesondere darin, ein gattungsgemäßes System mit verbesserten Eigenschaften hinsichtlich eines Bedienkomforts bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Lebensmittelzubereitungssystem mit zumindest einer Ausgabeeinheit, die insbesondere zu einer Ausgabe zumindest einer Information in Bezug auf zumindest ein Rezept vorgesehen ist, und mit zumindest einer Steuereinheit, die dazu vorgesehen ist, über die Ausgabeeinheit durch zumindest ein insbesondere ausgewähltes Rezept zu führen,
wobei die Steuereinheit dazu vorgesehen ist, über die Ausgabeeinheit durch zumindest einen Lebensmittelvorbereitungsschritt des Rezepts zu führen.

Durch die erfindungsgemäße Ausgestaltung kann insbesondere ein hoher Bedienkomfort erreicht werden. Ein Bediener kann insbesondere bei einer gesamten Zubereitung eines Rezepts, und zwar insbesondere bei zumindest einem Lebensmittelvorbereitungsschritt und/oder bei zumindest einem Heizschritt, unterstützt werden, wodurch insbesondere eine hohe Wahrscheinlichkeit eines Gelingens eines Rezepts und/oder eine hohe Bedienerzufriedenheit erzielt werden kann. Insbesondere kann einem Bediener eine größere Vielfalt an Rezepten und/oder kompliziertere Rezepte zur Verfügung gestellt werden, wodurch insbesondere eine hohe Flexibilität und/oder ein hoher Bedienkomfort ermöglicht werden kann. Es kann insbesondere eine einfache Zubereitung eines Rezepts und/oder eine hohe Wahrscheinlichkeit eines Gelingens eines Rezepts ermöglicht werden. Durch eine Kombination der Ausgabeeinheit, welche insbesondere zumindest eine Flüssigkristallanzeige aufweist, und eine Führung durch ein Rezept können insbesondere Stärken eines Produkts, insbesondere des Haushaltsgeräts, ausgenutzt werden, wodurch insbesondere eine hohe Markentreue eines Bedieners erreicht werden kann.

Unter einem "Lebensmittelzubereitungssystem" soll insbesondere ein System verstanden werden, welches zumindest eine Funktionseinheit aufweist, deren Hauptfunktion eine Zubereitung zumindest eines Lebensmittels und/oder zumindest eines Produkts ist, und welches insbesondere zusätzlich zumindest eine weitere Funktionseinheit aufweisen könnte, deren Hauptfunktion von einer Zubereitung zumindest eines Lebensmittels und/oder zumindest eines Produkts abweicht. Beispielsweise könnte die Funktionseinheit, deren Hauptfunktion insbesondere eine Zubereitung zumindest eines Lebensmittels und/oder zumindest eines Produkts ist, ein Haushaltsgerät, vorteilhaft ein Gargerät und vorzugsweise ein Kochfeld sein. In wenigstens einem Betriebszustand erhitzt und/oder erwärmt und/oder gart die Funktionseinheit insbesondere zumindest ein Lebensmittel und/oder zumindest ein Produkt, und zwar insbesondere zum Zweck einer Zubereitung des Lebensmittels und/oder des Produkts. Die weitere Funktionseinheit, deren Hauptfunktion insbesondere von einer Zubereitung zumindest eines Lebensmittels und/oder zumindest eines Produkts abweicht, könnte beispielsweise ein Mobilgerät und/oder ein Haushaltsgerät, insbesondere ein Kältegerät und/oder ein Skalierungsgerät und/oder ein Bearbeitungsgerät, sein. Das Skalierungsgerät ist eine Waage, insbesondere eine Küchenwaage. Das Bearbeitungsgerät ist eine Knetmaschine, eine Teigmaschine, ein Mixer oder eine Rührmaschine.

Das Lebensmittelzubereitungssystem unterscheidet sich insbesondere von einem Kochbuch, welches auf einem Datenträger gespeichert und/oder in zumindest einem Wiedergabegerät, wie beispielsweise einem DVD-Player, abspielbar ist. Bei der Führung durch das Rezept führt die Steuereinheit insbesondere über eine reine Wiedergabe von gespeicherten Daten hinausgehende Aktionen und/oder Handlungen aus und berechnet insbesondere aktiv zumindest eine weitere Aktion und/oder zumindest eine weitere Handlung. Die Steuereinheit ist insbesondere dazu vorgesehen, in wenigstens einem Betriebszustand auf zumindest eine Bedieneingabe zu reagieren und/oder insbesondere in Abhängigkeit von zumindest einer Bedieneingabe zumindest ein Rezept und/oder zumindest einen Rezeptschritt des Rezepts zu verändern. Unter "verändern" soll insbesondere bearbeiten und/oder abändern und/oder ändern und/oder löschen und/oder überspringen und/oder hinzufügen verstanden werden.

Unter einer "Funktionseinheit" soll insbesondere eine Einheit verstanden werden, welche in wenigstens einem Betriebszustand zumindest eine Haushaltsgerätehauptfunktion ausführt. Insbesondere ist die Funktionseinheit Teil eines Haushaltsgeräts und führt in wenigstens einem Betriebszustand die Haushaltsgerätehauptfunktion des Haushaltsgeräts aus. Die Funktionseinheit könnte beispielsweise in wenigstens einem Betriebszustand zumindest eine Kühlungsfunktion und/oder zumindest eine Gefrierfunktion und/oder zumindest eine Heizfunktion und/oder zumindest eine Garfunktion und/oder zumindest eine Bearbeitungsfunktion und/oder zumindest eine Skalierungsfunktion und/oder zumindest eine Reinigungsfunktion und/oder zumindest eine Trocknungsfunktion ausführen. Die Funktionseinheit könnte beispielsweise zumindest eine Kälteeinheit, welche beispielsweise zumindest einen Kühlkreislauf aufweisen könnte, und/oder zumindest eine Heizeinheit und/oder zumindest eine Trocknungseinheit und/oder zumindest eine Schleuder und/oder zumindest eine Reinigungseinheit und/oder zumindest eine Bearbeitungseinheit und/oder zumindest eine Skalierungseinheit sein.

Unter einer "Ausgabeeinheit" soll insbesondere eine Einheit verstanden werden, welche dazu vorgesehen ist, einem Bediener insbesondere optisch und/oder akustisch und/oder haptisch zumindest eine Kenngröße bereitzustellen, wie beispielsweise eine Information und/oder eine Zeitangabe und/oder eine Bedienaufforderung und/oder eine Handlungsaufforderung und/oder eine Auswahl. Die Ausgabeeinheit könnte insbesondere dazu vorgesehen sein, wenigstens ein akustisches Signal und/oder insbesondere wenigstens eine akustische Sequenz auszugeben, wie beispielsweise einen Klingelton und/oder ein Warnsignal und/oder eine Aufforderung in Form eines insbesondere vorgefertigten Satzes. Alternativ oder zusätzlich könnte die Ausgabeeinheit dazu vorgesehen sein, eine optische Ausgabe bereitzustellen, wie beispielsweise eine Anzeige wenigstens eines Bilds und/oder wenigstens eines Texts und/oder wenigstens einer Ziffer und/oder wenigstens einer Animation. Beispielsweise könnte die Ausgabeeinheit zumindest einen Lautsprecher aufweisen. Alternativ oder zusätzlich könnte die Ausgabeeinheit eine Anzeigeeinheit, insbesondere mit zumindest einem Leuchtmittel, vorteilhaft einer LED, und/oder einem insbesondere hinterleuchteten Display, insbesondere einem Matrixdisplay und/oder einem LCD-Display, einem OLED-Display und/oder elektronischen Papier, aufweisen. Vorteilhaft weist die Ausgabeeinheit zumindest eine Flüssigkristallanzeige auf.

Unter einer "Steuereinheit" soll insbesondere eine elektronische Einheit verstanden werden, die vorzugsweise dazu vorgesehen ist, zumindest die Ausgabeeinheit zu steuern und/oder zu regeln. Die Steuereinheit könnte beispielsweise in einer Steuer- und/oder Regeleinheit zumindest eines Haushaltsgeräts, insbesondere eines Gargeräts und vorteilhaft eines Kochfelds, wenigstens teilweise integriert sein und insbesondere dazu vorgesehen sein, zumindest eine Funktionseinheit des Haushaltsgeräts, welche insbesondere zu einer Durchführung einer Haushaltsgerätehauptfunktion insbesondere des Haushaltsgeräts vorgesehen sein könnte, zu steuern und/oder zu regeln. Insbesondere weist die Steuereinheit eine Recheneinheit und insbesondere zusätzlich zur Recheneinheit eine Speichereinheit mit einem darin gespeicherten Steuer- und/oder Regelprogramm auf, das dazu vorgesehen ist, von der Recheneinheit ausgeführt zu werden. Beispielsweise könnten in der Speichereinheit insbesondere zumindest zwei, vorteilhaft zumindest drei, besonders vorteilhaft zumindest fünf, vorzugsweise zumindest acht und besonders bevorzugt mehrere verschiedene Rezepte gespeichert sein. Die Steuereinheit ist insbesondere zu einer Kommunikation und/oder Interaktion mit dem Bediener vorgesehen, insbesondere über die Ausgabeeinheit und/oder über eine Bedienerschnittstelle. Die Steuereinheit ist insbesondere dazu vorgesehen, in wenigstens einem Betriebszustand die Ausgabeeinheit anzusteuern und insbesondere über die Ausgabeeinheit durch das Rezept zu führen.

Das Lebensmittelzubereitungssystem weist insbesondere zumindest eine Bedienerschnittstelle auf, welche insbesondere zumindest zu einer Bedieneingabe insbesondere durch einen Bediener vorgesehen ist. Beispielsweise könnte die Bedienerschnittstelle zumindest ein Touch-Bedienelement aufweisen. Alternativ oder zusätzlich könnte die Bedienerschnittstelle zumindest ein akustisches Eingabeelement, wie beispielsweise zumindest ein Mikrophon, aufweisen, welches insbesondere zu einer akustischen Eingabe vorgesehen sein könnte. Die Bedienerschnittstelle könnte alternativ oder zusätzlich beispielsweise zumindest ein mechanisches Eingabeelement aufweisen, wie beispielsweise zumindest einen Joystick und/oder zumindest eine Tastatur und/oder zumindest eine Maus. Insbesondere könnten die Bedienerschnittstelle und die Ausgabeeinheit wenigstens teilweise einstückig miteinander ausgestaltet sein. Unter der Wendung, dass ein erstes Objekt und ein zweites Objekt "wenigstens teilweise einstückig" miteinander ausgestaltet sind, soll insbesondere verstanden werden, dass das erste Objekt zumindest ein Element aufweist, welches ebenfalls Teil des zweiten Objekts ist, und/oder dass das zweite Objekt zumindest ein Element aufweist, welches ebenfalls Teil des ersten Objekts ist. Insbesondere weisen die Bedienerschnittstelle und die Ausgabeeinheit jeweils zumindest ein, insbesondere zumindest zwei, vorteilhaft zumindest drei gemeinsame Elemente auf, die Bestandteil, insbesondere funktionell wichtiger Bestandteil, von sowohl der Bedienerschnittstelle als auch von der Ausgabeeinheit sind.

Unter einem "Rezept" soll insbesondere eine zeitliche Folge von Heizeinstellungen und/oder sonstigen Betriebseinstellungen und/oder Handlungsaufforderungen und/oder von Rezeptschritten zu einer Zubereitung wenigstens eines Lebensmittels und/oder wenigstens eines Garguts verstanden werden. Die Heizeinstellungen weisen insbesondere wenigstens eine Heizdauer und/oder wenigstens eine Heizleistung und/oder wenigstens eine Heiztemperatur und/oder wenigstens eine Heizart, wie beispielsweise Braten und/oder Kochen und/oder Dämpfen und/oder Simmern und/oder Schmelzen und/oder Garen unter Druck, insbesondere in einem Druckkochtopf, und/oder Frittieren und/oder Sautieren und/oder Pochieren und/oder Backen und/oder Grillen, auf. Die Betriebseinstellungen weisen insbesondere zumindest eine Zeitdauer, welche eine Gesamtdauer des Rezepts definiert, und/oder zumindest eine zeitliche Abfolge von Rezeptschritten und/oder zumindest eine Art einer Ausgabe über die Ausgabeeinheit, wie beispielsweise optisch und/oder akustisch, auf. Das Rezept ist insbesondere als ein Kochrezept und/oder als ein Garrezept und/oder als ein Lebensmittelzubereitungsrezept ausgebildet.

Zumindest ein Rezept insbesondere der Rezepte weist insbesondere zumindest einen temperaturkritischen Rezeptschritt auf, in welchem insbesondere eine Abweichung eines Werts einer aktuellen Temperatur von einer Solltemperatur um mindestens 1 %, insbesondere um mindestens 2 %, vorteilhaft um mindestens 3 %, besonders vorteilhaft um mindestens 5 %, vorzugsweise um mindestens 7 % und bevorzugt um mindestens 10 % zu einem Misslingen eines in dem genannten Rezeptschritt zu erreichenden Ergebnisses führen könnte. Zumindest ein Rezept insbesondere der Rezepte, insbesondere zumindest zwei, vorteilhaft zumindest drei, besonders vorteilhaft zumindest vier, vorzugsweise zumindest fünf, bevorzugt zumindest sieben und besonders bevorzugt zumindest zehn Rezepte weist/weisen insbesondere zumindest zwei Rezeptschritte auf.

Unter einem "Rezeptschritt" soll insbesondere ein Teilabschnitt eines Rezepts verstanden werden, welcher eine insbesondere definierte Zeitdauer und einen insbesondere definierten Verfahrensschritt aufweist, wie beispielsweise einen Heizschritt und/oder einen Schritt mit einer Interaktion über die Ausgabeeinheit und/oder einen Schritt mit einer Interaktion über die Bedienerschnittstelle und/oder einen Schnitt mit einer Bearbeitung zumindest eines Lebensmittels und/oder einen Schritt mit einer Vorbereitung eines Lebensmittels, wobei die Zeitdauer insbesondere fest vorgegeben und/oder variabel, wie insbesondere von einer zu einer Bedieneingabe mittels der Bedienerschnittstelle benötigten Zeitdauer abhängig, ausgestaltet ist. Der Rezeptschritt könnte beispielsweise ein Heizschritt und/oder ein Garschritt und/oder ein Lebensmittelvorbereitungsschritt und/oder ein Lebensmittelzugabeschritt und/oder ein Lebensmittelentnahmeschritt sein.

Die Steuereinheit ist insbesondere dazu vorgesehen, in Abhängigkeit von zumindest einem Parameter zumindest ein Rezept über die Ausgabeeinheit vorzuschlagen. Unter der Wendung, dass die Steuereinheit dazu vorgesehen ist, in Abhängigkeit von zumindest einem Parameter zumindest ein Rezept über die Ausgabeeinheit "vorzuschlagen", soll insbesondere verstanden werden, dass die Steuereinheit in wenigstens einem Betriebszustand in Abhängigkeit von dem Parameter zumindest ein Rezept, beispielsweise aus zumindest einem Katalog an Rezepten, auswählt und das Rezept dem Bediener über die Ausgabeeinheit zu einer Auswahl ausgibt. Der Parameter könnte beispielsweise personenbezogen und/oder charakteristisch für einen insbesondere bestimmten Bediener und/oder regionenbezogen sein. Alternativ oder zusätzlich könnte der Parameter eine Bedieneingabe, insbesondere mittels der Bedienerschnittstelle, sein.

Unter einem "Lebensmittelvorbereitungsschritt" soll ein Rezeptschritt verstanden werden, welcher zu einer Vorbereitung eines Lebensmittels und/oder eines Produkt auf eine Garung des Lebensmittels und/oder des Produkts vorgesehen ist und welcher sich insbesondere von einem Heizschritt und/oder von einem Garschritt unterscheidet und welcher insbesondere zeitlich vor zumindest einem insbesondere abschließenden Heizschritt und/oder vor zumindest einem insbesondere abschließenden Garschritt erfolgt. Der Lebensmittelvorbereitungsschritt unterscheidet sich insbesondere von einem Hinzufügen von Lebensmitteln in ein Gargeschirr und/oder von einer Entnahme zumindest eines Lebensmittels aus einem Gargeschirr. Insbesondere ist der Lebensmittelvorbereitungsschritt zu zumindest einem Heizschritt und/oder zu zumindest einem Garschritt zeitlich beabstandet und diesem insbesondere vorgelagert. Der Lebensmittelvorbereitungsschritt könnte beispielsweise, insbesondere unter Berücksichtigung einer Verderblichkeit von in dem Lebensmittelvorbereitungsschritt vorzubereitenden Lebensmitteln, zu einer Durchführung in einem insbesondere beliebig großen zeitlichen Abstand zu zumindest einem Heizschritt und/oder zu zumindest einem Garschritt vorgesehen sein. Bei dem Lebensmittelvorbereitungsschritt könnte es sich beispielsweise um ein Wiegen zumindest eines Lebensmittels und/oder um ein Schneiden zumindest eines Lebensmittels und/oder um ein Würzen zumindest eines Lebensmittels und/oder um ein Hacken zumindest eines Lebensmittels und/oder um ein Kneten zumindest eines Lebensmittels und/oder um ein Schälen zumindest eines Lebensmittels und/oder um ein Mixen zumindest eines Lebensmittels und/oder um ein Mahlen zumindest eines Lebensmittels und/oder um ein Umrühren zumindest eines Lebensmittels und/oder um ein Aufschlagen zumindest eines Lebensmittels und/oder um ein Vermischen zumindest zweier Lebensmittel und/oder um ein Emulsifizieren zumindest zweier Lebensmittel handeln.

Unter der Wendung, dass die Steuereinheit dazu vorgesehen ist, über die Ausgabeeinheit durch zumindest einen Rezeptschritt des Rezepts zu "führen", soll insbesondere verstanden werden, dass die Steuereinheit in wenigstens einem Betriebszustand mittels wenigstens einer Ausgabe über die Ausgabeeinheit zu zumindest einer Handlung auffordert und/oder zumindest eine Informationen ausgibt, und/oder dass die Steuereinheit in wenigstens einem Betriebszustand zu einer Durchführung des Rezepts notwendige Rezeptschritte automatisch vornimmt und/oder einleitet. Unter "automatisch" soll insbesondere selbsttätig und/oder unter Vermeidung einer Interaktion mittels der Bedienerschnittstelle und/oder unter Vermeidung einer Handlung eines Bedieners verstanden werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnte das Lebensmittelzubereitungssystem zumindest ein Mobilgerät aufweisen, welches die Ausgabeeinheit wenigstens teilweise aufweisen könnte. Insbesondere könnte die Ausgabeeinheit wenigstens teilweise als eine Mobilgeräte-Ausgabeeinheit ausgebildet sein. Das Lebensmittelzubereitungssystem weist zumindest ein Haushaltsgerät auf, welches die Ausgabeeinheit wenigstens teilweise aufweist. Insbesondere ist die Ausgabeeinheit wenigstens teilweise als eine Haushaltsgeräte-Ausgabeeinheit ausgebildet. Unter der Wendung, dass ein erstes Objekt ein zweites Objekt "wenigstens teilweise" aufweist, soll insbesondere verstanden werden, dass das zweite Objekt zumindest einen Teilbereich, insbesondere zumindest ein Element und/oder zumindest eine Einheit, aufweist, welcher Teil des ersten Objekts ist und insbesondere zusätzlich zu dem Teilbereich zumindest einen weiteren Teilbereich aufweisen könnte, welcher insbesondere Teil zumindest eines von dem ersten Objekt verschiedenen dritten Objekts sein könnte. Unter einem "Haushaltsgerät" soll insbesondere ein elektrisches und/oder elektronisches Gerät verstanden werden, welches zu einer Garung von Lebensmitteln und/oder Zubereitung von Lebensmitteln und/oder Lagerung, insbesondere Kühlung und/oder Gefrierung, von Lebensmitteln und/oder zu einer Reinigung, insbesondere von Geschirr und/oder von Wäsche, wie beispielsweise von Kleidungsstücken, und/oder zu einer Trocknung von Wäsche vorgesehen ist. Insbesondere ist das Haushaltsgerät für einen Privathaushalt vorgesehen. Das Haushaltsgerät ist insbesondere einer Bezeichnung ,weiße Ware' zugeordnet. Beispielsweise könnte es sich bei dem Haushaltsgerät um ein Kältegerät, wie beispielsweise eine Kühltruhe und vorteilhaft um einen Kühl- und/oder Gefrierschrank, handeln. Bei dem Haushaltsgerät könnte es sich alternativ oder zusätzlich um ein Reinigungsgerät handeln, wobei das Haushaltsgerät insbesondere eine Spülmaschine und/oder eine Waschmaschine und/oder ein Trockner sein könnte. Alternativ oder zusätzlich könnte es sich bei dem Haushaltsgerät um ein Skalierungsgerät handeln. Bei dem Haushaltsgerät könnte es sich alternativ oder zusätzlich um ein Bearbeitungsgerät handeln. Bei dem Haushaltsgerät handelt es sich um ein Gargerät. Ein als Gargerät ausgebildetes Haushaltsgerät könnte beispielsweise ein Backofen und/oder eine Mikrowelle und/oder ein Grillgerät und/oder ein Dampfgargerät sein. Vorteilhaft ist das als Gargerät ausgebildete Haushaltsgerät ein Kochfeld und vorzugsweise ein Induktionskochfeld. Dadurch kann insbesondere ein hoher Bedienkomfort erzielt werden. Insbesondere kann eine Ausgabe über die Ausgabeeinheit insbesondere direkt an dem Haushaltsgerät erfolgen, an welchem ein Nutzer aktiv ist, wodurch insbesondere eine Übertragung von einer externen Ausgabeeinheit auf das Haushaltsgerät vermieden und/oder ein hoher Bedienkomfort ermöglicht werden kann.

Die Steuereinheit ist dazu vorgesehen, in dem Lebensmittelvorbereitungsschritt über die Ausgabeeinheit zu einer Benutzung zumindest einer Funktionseinheit, welche insbesondere getrennt von einem Haushaltsgerät ausgebildet ist, an welchem insbesondere zumindest ein Garschritt und/oder zumindest ein Heizschritt des Rezepts erfolgt, aufzufordern. Insbesondere ist die Funktionseinheit verschieden von einem Haushaltsgerät ausgebildet, welches die Ausgabeeinheit und/oder die Steuereinheit wenigstens teilweise ausbildet. Bei der Funktionseinheit könnte es sich insbesondere um zumindest eine Bearbeitungseinheit und/oder um zumindest eine Skalierungseinheit handeln. Insbesondere könnte das Lebensmittelzubereitungssystem zumindest ein Bearbeitungsgerät und/oder zumindest ein Skalierungsgerät aufweisen, welches insbesondere die Funktionseinheit wenigstens teilweise aufweisen könnte. In wenigstens einem Betriebszustand integriert die Steuereinheit zumindest eine insbesondere von einem Gargerät und/oder von einem Kochfeld verschiedene Funktionseinheit wenigstens teilweise, insbesondere in zumindest einem Rezeptschritt, in das Rezept. Die Steuereinheit könnte insbesondere dazu vorgesehen sein, in dem Lebensmittelvorbereitungsschritt über die Ausgabeeinheit zu einer Benutzung zumindest eines Werkzeugs, insbesondere zumindest eines Küchenwerkzeugs, und/oder zumindest eines Bestecks, insbesondere zumindest eines Messers und/oder zumindest einer Gabel und/oder zumindest eines Löffels, und/oder zumindest einer Dosierhilfe aufzufordern. Die Funktionseinheit und die Steuereinheit kommunizieren in wenigstens einem Betriebszustand miteinander, und zwar drahtlos. Die Funktionseinheit übermittelt in wenigstens einem Betriebszustand in wenigstens einem Ergebnisübertragungsschritt ein Ergebnis einer Benutzung der Funktionseinheit an die Steuereinheit. Alternativ oder zusätzlich könnte ein Bediener in wenigstens einem Betriebszustand in wenigstens einem Ergebnisübertragungsschritt ein Ergebnis einer Benutzung der Funktionseinheit manuell an die Steuereinheit übermitteln, beispielsweise durch zumindest eine Bedieneingabe mittels der Bedienerschnittstelle. Ein Bediener könnte in wenigstens einem Betriebszustand in wenigstens einem Ergebnisübertragungsschritt insbesondere alternativ oder zusätzlich ein Ergebnis einer Benutzung der Funktionseinheit manuell an zumindest ein Mobilgerät, insbesondere des Lebensmittelzubereitungssystems, übermitteln, welches anschließend das Ergebnis an die Steuereinheit übermitteln könnte. Dadurch kann insbesondere eine hohe Flexibilität ermöglicht und/oder eine Vielzahl an möglichen Rezepten bereitgestellt werden. Insbesondere kann die Steuereinheit einen Bediener durch sämtliche Rezeptschritte eines Rezepts führen, und zwar unabhängig von einer Art des Rezeptschritts, wodurch insbesondere eine hohe Wahrscheinlichkeit eines Gelingens des Rezepts erzielt werden kann.

Das Lebensmittelzubereitungssystem weist zumindest ein Haushaltsgerät auf, welches die Funktionseinheit wenigstens teilweise aufweist. Beispielsweise könnte es sich bei dem Haushaltsgerät, welches die Funktionseinheit wenigstens teilweise aufweist, um ein Gargerät, wie beispielsweise einen Backofen und/oder eine Mikrowelle und/oder ein Grillgerät und/oder ein Dampfgargerät handeln. Das Haushaltsgerät, welches die Funktionseinheit wenigstens teilweise aufweist, ist von einem Gargerät verschieden ausgebildet. Bei dem Haushaltsgerät, welches die Funktionseinheit wenigstens teilweise aufweist, handelt es sich um ein Bearbeitungsgerät und/oder um ein Skalierungsgerät. Dadurch kann insbesondere ein besonders hoher Bedienkomfort erreicht werden.

Das Haushaltsgerät, welches die Ausgabeeinheit wenigstens teilweise aufweist, und das Haushaltsgerät, welches die Funktionseinheit wenigstens teilweise aufweist, sind voneinander verschieden. Das Haushaltsgerät, welches die Ausgabeeinheit wenigstens teilweise aufweist, ist als ein Gargerät, insbesondere als ein Kochfeld und vorteilhaft als ein Induktionskochfeld, und das Haushaltsgerät, welches die Funktionseinheit wenigstens teilweise aufweist, als ein von einem Gargerät verschiedenes Haushaltsgerät, und zwar als ein Bearbeitungsgerät oder als ein Skalierungsgerät ausgebildet. Dadurch kann insbesondere eine hohe Flexibilität ermöglicht und/oder einem Bediener eine Vielzahl an verschiedenen Rezepten zur Auswahl angeboten und/oder vorgeschlagen werden.

Beispielsweise könnte die Steuereinheit in wenigstens einem Betriebszustand zumindest einen Rezeptschritt des Rezepts, insbesondere zumindest einen Heizschritt und/oder zumindest einen Garschritt, automatisch ausführen. Vorzugsweise ist die Steuereinheit dazu vorgesehen, in wenigstens einem Betriebszustand zumindest eine Bedieneingabe insbesondere mittels zumindest einer Bedienerschnittstelle zu einer Bestätigung einer Beendigung zumindest eines Rezeptschritts des Rezepts abzuwarten und insbesondere in Abhängigkeit von der Bedieneingabe den Rezeptschritt zu beenden. Insbesondere könnte die Steuereinheit in wenigstens einem Betriebszustand im Anschluss an die Beendigung des Rezeptschritts zumindest einen weiteren Rezeptschritt starten und/oder das insbesondere gesamte Rezept beenden. Dadurch kann insbesondere eine vorzeitige Beendigung eines Rezeptschritts vermieden und/oder ein Bediener in einer für ihn passenden Geschwindigkeit durch das Rezept geführt werden, wodurch insbesondere eine hohe Bedienerzufriedenheit ermöglicht werden kann.

Die Steuereinheit könnte in wenigstens einem Betriebszustand beispielsweise wenigstens einen Großteil und vorteilhaft alle der Rezeptschritte ausschließlich in Abhängigkeit von zumindest einer Bedieneingabe durchführen. Beispielsweise könnte die Steuereinheit alternativ oder zusätzlich in wenigstens einem Betriebszustand in Abhängigkeit von zumindest einer Bedieneingabe zumindest einen Rezeptschritt beenden und/oder zumindest einen weiteren Rezeptschritt starten und/oder zumindest einen Rezeptschritt verändern. Vorzugsweise ist die Steuereinheit dazu vorgesehen, zumindest einen Rezeptschritt des Rezepts, insbesondere zumindest einen Heizschritt und/oder zumindest einen Garschritt, automatisch durchzuführen. Dadurch kann insbesondere eine schnelle Zubereitung von Lebensmitteln ermöglicht und/oder einem Bediener Arbeit abgenommen werden.

Ferner wird vorgeschlagen, dass die Steuereinheit dazu vorgesehen ist, in Abhängigkeit von zumindest einer Bedieneingabe insbesondere mittels zumindest einer Bedienerschnittstelle das Rezept, insbesondere zumindest einen Rezeptschritt des Rezepts, zu verändern, insbesondere zumindest einen Rezeptschritt des Rezepts zu bearbeiten und/oder abzuändern und/oder zu ändern und/oder zu löschen und/oder zu überspringen und/oder hinzuzufügen. Alternativ oder zusätzlich könnte die Steuereinheit dazu vorgesehen sein, in Abhängigkeit von zumindest einer Bedieneingabe insbesondere mittels zumindest einer Bedienerschnittstelle zumindest ein Rezept zu erstellen und/oder insbesondere in zumindest einer Speichereinheit der Steuereinheit zu speichern. Insbesondere ist die Steuereinheit dazu vorgesehen, in Abhängigkeit von zumindest einer Bedieneingabe insbesondere mittels zumindest einer Bedienerschnittstelle das Rezept, insbesondere zumindest einen Rezeptschritt des Rezepts, vorteilhaft während einer Durchführung des Rezepts und/oder im Anschluss an eine Beendigung des Rezepts und/oder vor einem Start einer Durchführung des Rezepts zu verändern. Dadurch kann insbesondere eine individuelle Anpassung zumindest eines Rezepts ermöglicht werden, wodurch insbesondere eine hohe Flexibilität erzielt und/oder Bedürfnisse eines Bedieners berücksichtigt werden kann/können. Insbesondere kann ein Rezept individuell an Bedürfnisse eines Bedieners angepasst werden, wodurch insbesondere ein hoher Bedienkomfort erreicht werden kann.

Die Steuereinheit könnte in wenigstens einem Betriebszustand, beispielsweise im Anschluss an eine Beendigung des Rezepts, das veränderte Rezept unter dem Namen des Rezepts speichern und insbesondere das ursprüngliche Rezept überschreiben. Vorzugsweise ist die Steuereinheit dazu vorgesehen, im Anschluss an eine Beendigung des Rezepts das veränderte Rezept automatisch als neues Rezept und insbesondere unter verändertem Namen und/oder unter Aufrechterhaltung des insbesondere ursprünglichen Rezepts zu speichern. Dadurch können insbesondere von einem Bediener vorgenommene Änderungen an einem Rezept erhalten bleiben, wodurch ein Bediener insbesondere einen individuellen Katalog an Rezepten aufbauen kann. Hierdurch kann insbesondere ein hoher Bedienkomfort und/oder eine hohe Bedienerzufriedenheit erreicht werden.

Weiterhin wird vorgeschlagen, dass die Steuereinheit dazu vorgesehen ist, in Abhängigkeit von zumindest einer Bedieneingabe insbesondere mittels zumindest einer Bedienerschnittstelle zumindest einen Rezeptschritt des Rezepts zu überspringen und insbesondere zumindest einen insbesondere auf den Rezeptschritt folgenden weiteren Rezeptschritt zu starten und/oder das insbesondere gesamte Rezept zu beenden. Dadurch kann insbesondere eine schnelle Zubereitung von Lebensmitteln und/oder eine an die Bedürfnisse eines Bedieners angepasste Durchführung des Rezepts ermöglicht werden.

Beispielsweise könnte das Lebensmittelzubereitungssystem zumindest ein Mobilgerät aufweisen, welches die Steuereinheit wenigstens teilweise aufweisen könnte. Insbesondere könnte die Steuereinheit wenigstens teilweise als eine Mobilgeräte-Steuereinheit ausgebildet sein. Vorzugsweise weist das Lebensmittelzubereitungssystem zumindest ein Haushaltsgerät auf, welches die Steuereinheit wenigstens teilweise aufweist. Die Steuereinheit ist insbesondere wenigstens teilweise als eine Haushaltsgeräte-Steuereinheit ausgebildet. Insbesondere ist das Haushaltsgerät, welches die Steuereinheit wenigstens teilweise aufweist, als ein Gargerät, insbesondere als ein Kochfeld und vorteilhaft als ein Induktionskochfeld, ausgebildet. Das Haushaltsgerät, welches die Steuereinheit wenigstens teilweise aufweist, und das Haushaltsgerät, welches die Ausgabeeinheit wenigstens teilweise aufweist, sind insbesondere identisch und/oder einstückig ausgebildet. Dadurch kann insbesondere eine geringe Bauteilevielfalt und/oder eine geringe Lagerhaltung ermöglicht werden.

Ein besonders hoher Bedienkomfort kann insbesondere erreicht werden durch ein Verfahren zu einem Betrieb eines Lebensmittelzubereitungssystems, wobei insbesondere automatisch durch zumindest einen Lebensmittelvorbereitungsschritt zumindest eines Rezepts geführt wird.

Das Lebensmittelzubereitungssystem soll hierbei nicht auf die oben beschriebene Anwendung und Ausführungsform beschränkt sein. Insbesondere kann das Lebensmittelzubereitungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Lebensmittelzubereitungssystem in einer schematischen Draufsicht und
- Fig. 2: ein Diagramm, welches ein Verfahren zu einem Betrieb des Lebensmittelzubereitungssystems zeigt, in einer schematischen Darstellung.

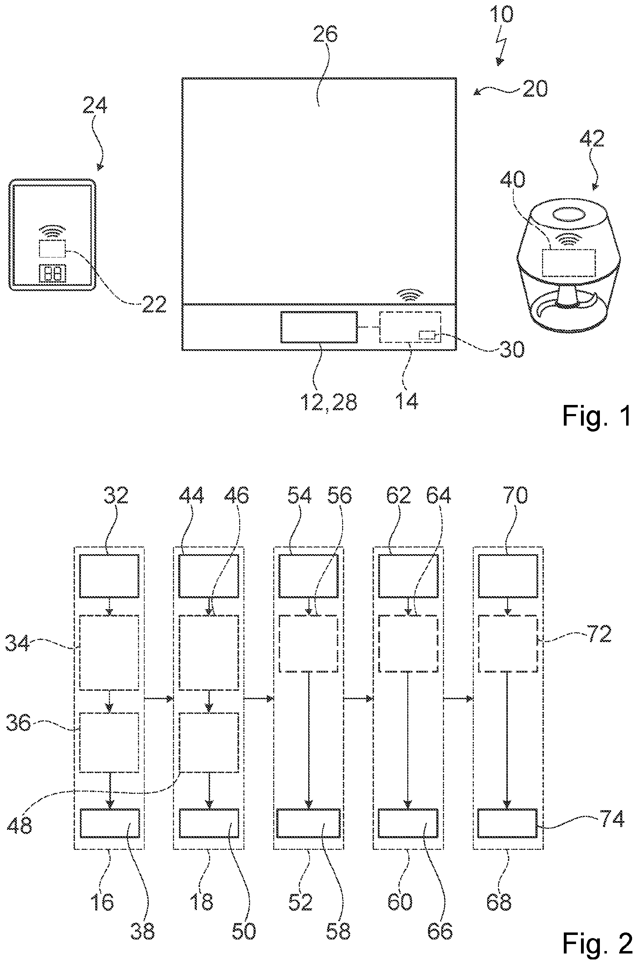

Fig. 1 zeigt ein Lebensmittelzubereitungssystem 10, welches ein Haushaltsgerät 20 aufweist. Das Haushaltsgerät 20 ist als ein Gargerät ausgebildet. Im vorliegenden Ausführungsbeispiel ist das Haushaltsgerät 20 als ein Kochfeld, und zwar insbesondere als ein Induktionskochfeld, ausgebildet.

Das als Gargerät ausgebildete Haushaltsgerät 20 weist einen Grundkörper 26 auf. Im vorliegenden Ausführungsbeispiel ist der Grundkörper 26 als eine Geräteplatte, und zwar insbesondere als eine Kochfeldplatte, ausgebildet. In einem montierten Zustand bildet der Grundkörper 26 einen Teil eines Geräteaußengehäuses, insbesondere eines Kochfeldaußengehäuses aus, und zwar insbesondere eines Kochfeldaußengehäuses insbesondere des als Gargerät ausgebildeten Haushaltsgeräts 20. Der Grundkörper 26 ist zu einem Aufstellen von Gargeschirr vorgesehen (nicht dargestellt).

Das Lebensmittelzubereitungssystem 10 weist eine Vielzahl an Heizeinheiten (nicht dargestellt) auf. Die Heizeinheiten sind in einer Einbaulage unterhalb des Grundkörpers 26 angeordnet. In einem montierten Zustand sind die Heizeinheiten in dem als Gargerät ausgebildeten Haushaltsgerät 20 integriert. Die Heizeinheiten sind dazu vorgesehen, auf dem Grundkörper 26 oberhalb der Heizeinheiten aufgestelltes Gargeschirr zu erhitzen.

Das Lebensmittelzubereitungssystem 10 weist eine Bedienerschnittstelle 28 zu einer Eingabe und/oder Auswahl von Betriebsparametern auf, beispielsweise einer Heizleistung und/oder einer Heizleistungsdichte und/oder einer Heizzone. Die Bedienerschnittstelle 28 ist zu einer Ausgabe eines Werts eines Betriebsparameters an einen Bediener vorgesehen. In einem montierten Zustand ist die Bedienerschnittstelle 28 in dem als Gargerät ausgebildeten Haushaltsgerät 20 integriert.

Das Lebensmittelzubereitungssystem 10 weist eine Ausgabeeinheit 12 auf. Die Ausgabeeinheit 12 ist teilweise einstückig mit der Bedienerschnittstelle 28 ausgebildet. Die Ausgabeeinheit 12 ist zu einer optischen Ausgabe an einen Bediener vorgesehen. Im vorliegenden Ausführungsbeispiel weist die Ausgabeeinheit 12 eine Flüssigkristallanzeige auf.

In einem montierten Zustand ist die Ausgabeeinheit 12 in dem als Gargerät ausgebildeten Haushaltsgerät 20 integriert. Die Ausgabeeinheit 12 ist Teil des als Gargerät ausgebildeten Haushaltsgeräts 20. Alternativ könnte die Ausgabeeinheit 12 beispielsweise teilweise in dem als Gargerät ausgebildeten Haushaltsgerät 20 integriert und insbesondere teilweise in einem Mobilgerät des Lebensmittelzubereitungssystems 10 integriert sein.

Das Lebensmittelzubereitungssystem 10 weist eine Steuereinheit 14 auf. Die Steuereinheit 14 ist dazu vorgesehen, in Abhängigkeit von mittels der Bedienerschnittstelle 28 eingegebener Betriebsparameter Aktionen auszuführen und/oder Einstellungen zu verändern. Die Steuereinheit 14 regelt in einem Heizbetriebszustand eine Energiezufuhr zu den Heizeinheiten. In einem montierten Zustand ist die Steuereinheit 14 in dem als Gargerät ausgebildeten Haushaltsgerät 20 integriert. Das als Gargerät ausgebildete Haushaltsgerät 20 weist die Steuereinheit 14 auf.

Das Haushaltsgerät 20, welches die Ausgabeeinheit 12 teilweise aufweist, und das Haushaltsgerät 20, welches die Steuereinheit 14 teilweise aufweist, sind identisch.

In einem Betriebszustand führt die Steuereinheit 14 über die Ausgabeeinheit 12 durch ein ausgewähltes Rezept. Die Steuereinheit 14 weist eine Speichereinheit 30 auf. In der Speichereinheit 30 sind in einem Betriebszustand eine Vielzahl an Rezepten gespeichert. Die Steuereinheit 14 schlägt in einem Betriebszustand in Abhängigkeit von einem Parameter zumindest ein Rezept über die Ausgabeeinheit 12 vor. Im vorliegenden Ausführungsbeispiel ist der Parameter eine Bedieneingabe mittels der Bedienerschnittstelle 28. In Abhängigkeit von einer Bedieneingabe, mittels welcher ein Bediener insbesondere ein Rezept auswählt, führt die Steuereinheit 14 in einem Betriebszustand über die Ausgabeeinheit 12 durch das ausgewählte Rezept.

In einem Betriebszustand führt die Steuereinheit 14 über die Ausgabeeinheit 12 durch zumindest einen Lebensmittelvorbereitungsschritt 16, 18 des ausgewählten Rezepts. Im vorliegenden Ausführungsbeispiel führt die Steuereinheit 14 über die Ausgabeeinheit 12 durch zwei Lebensmittelvorbereitungsschritte 16, 18 des ausgewählten Rezepts. Im Folgenden wird beispielhaft ein Rezept zu einer Zubereitung von Zwiebeln beschrieben. Die derart zubereiteten Zwiebeln könnten beispielsweise als Röstzwiebeln und/oder zu einer weiteren Zubereitung eines weiteren Rezepts, beispielsweise einer Paella und/oder einem Bauernfrühstück und/oder Käsespätzle, verwendet werden.

In einem Verfahren zu einem Betrieb des Lebensmittelzubereitungssystems 10 wird durch zumindest einen Lebensmittelvorbereitungsschritt 16, 18 zumindest eines ausgewählten Rezepts geführt. In einem Lebensmittelvorbereitungsschritt 16 wird über die Ausgabeeinheit 12 zu einer Benutzung einer Funktionseinheit 22 aufgefordert.

Das Lebensmittelzubereitungssystem 10 weist die Funktionseinheit 22 auf. Die Funktionseinheit 22 ist im vorliegenden Ausführungsbeispiel als eine Skalierungseinheit ausgebildet. Das Lebensmittelzubereitungssystem 10 weist ein Haushaltsgerät 24 auf, welches die Funktionseinheit 22 aufweist. Das Haushaltsgerät 24, welches die Funktionseinheit 22 aufweist, ist als ein Skalierungsgerät, und zwar insbesondere als eine Waage und vorteilhaft als eine Küchenwaage, ausgebildet. Das Haushaltsgerät 20, welches die Ausgabeeinheit 12 teilweise aufweist, und das Haushaltsgerät 24, welches die Funktionseinheit 22 aufweist, sind voneinander verschieden.

In einem Betriebszustand fordert die Steuereinheit 14 in dem Lebensmittelvorbereitungsschritt 16 über die Ausgabeeinheit 12 zu einer Benutzung der Funktionseinheit 22 auf. In dem Lebensmittelvorbereitungsschritt 16 fordert die Steuereinheit 14 im vorliegenden Ausführungsbeispiel in einem Aufforderungsschritt 32 über die Ausgabeeinheit 12 zu einem Abwiegen einer bestimmten Menge eines Lebensmittels, beispielsweise einer Menge von 150 gr. an Zwiebeln, mittels der Funktionseinheit 22 auf. Ein Bediener wiegt in dem Lebensmittelvorbereitungsschritt 16 in einem Skalierungsschritt 34 die bestimmte Menge des Lebensmittels mittels der Funktionseinheit 22 ab. In dem Lebensmittelvorbereitungsschritt 16 überträgt ein Bediener in einem Ergebnisübertragungsschritt 36 die Menge des Lebensmittels an die Steuereinheit 14, und zwar insbesondere durch eine Bedieneingabe mittels der Bedienerschnittstelle 28. Die an die Steuereinheit 14 übertragene Menge des Lebensmittels wird in dem Lebensmittelvorbereitungsschritt 16 in einem Bestätigungsschritt 38 von einem Bediener bestätigt. Die Steuereinheit 14 wartet in einem Betriebszustand eine Bedieneingabe zu einer Bestätigung einer Beendigung eines Rezeptschritts des Rezepts, und zwar insbesondere des Lebensmittelvorbereitungsschritts 16 des Rezepts, ab.

In einem alternativen Fall könnte die Steuereinheit 14 in einem Betriebszustand in Abhängigkeit von einer Bedieneingabe das Rezept verändern. Beispielsweise könnte ein Bediener eine veränderte Menge des Lebensmittels, beispielsweise eine größere Menge des Lebensmittels oder eine kleinere Menge des Lebensmittels, zubereiten wollen. In dem Lebensmittelvorbereitungsschritt 16 könnte ein Bediener in einem Ergebnisübertragungsschritt 36 die veränderte Menge des Lebensmittels an die Steuereinheit 14 übertragen, und zwar insbesondere durch eine Bedieneingabe mittels der Bedienerschnittstelle 28. Im Anschluss an eine Veränderung des Rezepts berechnet die Steuereinheit 14 in einem Betriebszustand zumindest einen verbleibenden Rezeptschritt, insbesondere einen Großteil der Rezeptschritte und vorteilhaft alle Rezeptschritte des Rezepts neu. Im Anschluss an eine Beendigung des Rezepts mit dem veränderten Rezeptschritt speichert die Steuereinheit 14 das veränderte Rezept automatisch als neues Rezept in der Speichereinheit 30. In Abhängigkeit von einer Bedieneingabe, welche insbesondere im Anschluss an die Speicherung des veränderten Rezepts erfolgt, schlägt die Steuereinheit 14 über die Ausgabeeinheit 12 das ursprüngliche Rezept und das veränderte Rezept zu einer Auswahl vor.

In einem alternativen Fall könnte die Steuereinheit 14 in einem Betriebszustand in Abhängigkeit von einer Bedieneingabe zumindest einen Rezeptschritt des Rezepts überspringen. Beispielsweise könnte ein Bediener den Lebensmittelvorbereitungsschritt 16 überspringen wollen, da der Bediener insbesondere ein Wiegen für unnötig erachtet. In dem Lebensmittelvorbereitungsschritt 16 könnte ein Bediener durch eine Bedieneingabe die Steuereinheit 14 zu einem Überspringen des Rezeptschritts, insbesondere des Lebensmittelvorbereitungsschritts 16, auffordern. Die Steuereinheit 14 startet in einem Betriebszustand in Abhängigkeit von einer Bedieneingabe, welche insbesondere ein Überspringen eines Rezeptschritts des Rezepts aufweist, zumindest einen auf den Rezeptschritt folgenden weiteren Rezeptschritt und/oder beendet das gesamte Rezept.

Im Anschluss an eine Beendigung des Lebensmittelvorbereitungsschritts 16, welchen die Steuereinheit 14 insbesondere in Abhängigkeit von einer Bestätigung einer Beendigung des Rezeptschritts beendet, startet die Steuereinheit 14 in einem Betriebszustand zumindest einen auf den Rezeptschritt folgenden weiteren Rezeptschritt. Im vorliegenden Ausführungsbeispiel folgt auf den Lebensmittelvorbereitungsschritt 16 ein von dem Lebensmittelvorbereitungsschritt 16 verschiedener insbesondere weiterer Lebensmittelvorbereitungsschritt 18.

In dem insbesondere weiteren Lebensmittelvorbereitungsschritt 18 fordert die Steuereinheit 14 in einem Betriebszustand über die Ausgabeeinheit 12 zu einer Benutzung einer Bearbeitungseinheit 40 auf. Das Lebensmittelzubereitungssystem 10 weist ein Haushaltsgerät 42 auf, welches die Bearbeitungseinheit 40 aufweist. Das Haushaltsgerät 20, welches die Ausgabeeinheit 12 teilweise aufweist, und das Haushaltsgerät 42, welches die Bearbeitungseinheit 40 aufweist, sind voneinander verschieden. Das Haushaltsgerät 42, welches die Bearbeitungseinheit 40 aufweist, ist als ein Bearbeitungsgerät ausgebildet. Im vorliegenden Ausführungsbeispiel ist das Haushaltsgerät 42, welches die Bearbeitungseinheit 40 aufweist, als ein Zerkleinerer, insbesondere als ein Multizerkleinerer, ausgebildet.

Alternativ könnte die Steuereinheit 14 in dem insbesondere weiteren Lebensmittelvorbereitungsschritt 18 in einem Betriebszustand über die Ausgabeeinheit 12 zu einer Benutzung eines Werkzeugs, insbesondere eines Küchenwerkzeugs, und eines Bestecks, insbesondere eines Messers, auffordern. Das Werkzeug könnte insbesondere als ein Schneidbrett ausgebildet sein.

In dem insbesondere weiteren Lebensmittelvorbereitungsschritt 18 fordert die Steuereinheit 14 im vorliegenden Ausführungsbeispiel in einem Aufforderungsschritt 44 über die Ausgabeeinheit 12 zu einem Zerkleinern der bestimmten Menge eines Lebensmittels, beispielsweise der Menge von 150 gr. an Zwiebeln, mittels der Bearbeitungseinheit 40 auf. Ein Bediener zerkleinert in dem insbesondere weiteren Lebensmittelvorbereitungsschritt 18 in einem Bearbeitungsschritt 46 die bestimmte Menge des Lebensmittels mittels der Bearbeitungseinheit 40. In dem insbesondere weiteren Lebensmittelvorbereitungsschritt 18 wartet die Steuereinheit 14 in einem Warteschritt 48 eine vordefinierte Zeitdauer auf eine Bestätigung durch eine Bedieneingabe. In einem Bestätigungsschritt 50 bestätigt ein Bediener in dem insbesondere weiteren Lebensmittelvorbereitungsschritt 18 durch eine Bedieneingabe das Zerkleinern der Menge des Lebensmittels. Die Steuereinheit 14 wartet in einem Betriebszustand eine Bedieneingabe zu einer Bestätigung einer Beendigung eines Rezeptschritts des Rezepts, und zwar insbesondere des insbesondere weiteren Lebensmittelvorbereitungsschritts 18 des Rezepts, ab.

In einem Heizschritt 52 erhitzt die Steuereinheit 14 in einem Aufheizschritt 54 ein aufgestelltes Gargeschirr, in welchem sich beispielsweise Fett und/oder Öl befindet. Die Steuereinheit 14 führt in einem Betriebszustand zumindest einen Rezeptschritt des Rezepts, insbesondere den Heizschritt 52, automatisch durch. In dem Heizschritt 52 überprüft die Steuereinheit 14 in einem Kontrollschritt 56 eine Temperatur des Gargeschirrs. Die Steuereinheit 14 wartet in dem Kontrollschritt 56 eine vordefinierte Zeitdauer auf eine Bestätigung durch eine Bedieneingabe ab. In einem Bestätigungsschritt 58 bestätigt ein Bediener in dem Heizschritt 52 durch eine Bedieneingabe eine Beendigung des Heizschritts 52. Die Steuereinheit 14 wartet in einem Betriebszustand eine Bedieneingabe zu einer Bestätigung einer Beendigung eines Rezeptschritts des Rezepts, und zwar insbesondere des Heizschritts 52 des Rezepts, ab.

Im Anschluss an den Heizschritt 52 startet die Steuereinheit 14 in Abhängigkeit an eine Bedieneingabe, mit welcher insbesondere eine Bestätigung einer Beendigung des Heizschritts 52 erfolgt, einen Lebensmittelzugabeschritt 60. In dem Lebensmittelzugabeschritt 60 fordert die Steuereinheit 14 über die Ausgabeeinheit 12 in einem Aufforderungsschritt 62 zu einer Zugabe des zerkleinerten Lebensmittels auf. Die Steuereinheit 14 detektiert in dem Lebensmittelzugabeschritt 60 in einem Detektionsschritt 64 automatisch eine Zugabe des zerkleinerten Lebensmittels, und zwar insbesondere durch einen Temperaturabfall insbesondere des erhitzten Gargeschirrs. In einem Bestätigungsschritt 66 bestätigt ein Bediener in dem Lebensmittelzugabeschritt 60 durch eine Bedieneingabe eine Beendigung des Lebensmittelzugabeschritts 60. Die Steuereinheit 14 wartet in einem Betriebszustand eine Bedieneingabe zu einer Bestätigung einer Beendigung eines Rezeptschritts des Rezepts, und zwar insbesondere des Lebensmittelzugabeschritts 60 des Rezepts, ab.

Im Anschluss an den Lebensmittelzugabeschritt 60 startet die Steuereinheit 14 in Abhängigkeit an eine Bedieneingabe, mit welcher insbesondere eine Bestätigung einer Beendigung des Lebensmittelzugabeschritts 60 erfolgt, einen Garschritt 68. In dem Garschritt 68 gart die Steuereinheit 14 automatisch in einem Ausführungsschritt 70 die hinzugefügten Lebensmittel, und zwar insbesondere für eine vordefinierte Zeitspanne. Die Steuereinheit 14 führt in einem Betriebszustand zumindest einen Rezeptschritt des Rezepts, insbesondere den Garschritt 68, automatisch durch. In dem Garschritt 68 überprüft die Steuereinheit 14 in einem Kontrollschritt 72 eine Temperatur des Gargeschirrs. Die Steuereinheit 14 wartet in dem Kontrollschritt 72 eine vordefinierte Zeitdauer auf eine Bestätigung durch eine Bedieneingabe. Im Anschluss an die vordefinierte Zeitdauer fordert die Steuereinheit 14 in einem Bestätigungsschritt 74 über die Ausgabeeinheit 12 zu einer Bestätigung einer Beendigung eines Rezeptschritts des Rezepts, und zwar insbesondere des Garschritts 68 des Rezepts, auf. In dem Bestätigungsschritt 74 bestätigt ein Bediener in dem Garschritt 68 durch eine Bedieneingabe eine Beendigung des Garschritts 68, und zwar insbesondere nach Ablauf der vordefinierten Zeitdauer. Die Steuereinheit 14 wartet in einem Betriebszustand eine Bedieneingabe zu einer Bestätigung einer Beendigung eines Rezeptschritts des Rezepts, und zwar insbesondere des Garschritts 68 des Rezepts, ab.

In Abhängigkeit einer Bestätigung einer Beendigung eines Rezeptschritts des Rezepts, und zwar insbesondere des Garschritts 68 des Rezepts, beendet die Steuereinheit 14 in einem Betriebszustand das insbesondere gesamte Rezept. Die Steuereinheit 14 deaktiviert in Abhängigkeit einer Bestätigung einer Beendigung eines Rezeptschritts des Rezepts, und zwar insbesondere des Garschritts 68 des Rezepts, zumindest eine Heizeinheit, insbesondere alle Heizeinheiten.

### BEZUGSZEICHEN

- 10: Lebensmittelzubereitungssystem
- 12: Ausgabeeinheit
- 14: Steuereinheit
- 16: Lebensmittelvorbereitungsschritt
- 18: Lebensmittelvorbereitungsschritt
- 20: Haushaltsgerät
- 22: Funktionseinheit
- 24: Haushaltsgerät
- 26: Grundkörper
- 28: Bedienerschnittstelle
- 30: Speichereinheit
- 32: Aufforderungsschritt
- 34: Skalierungsschritt
- 36: Ergebnisübertragungsschritt
- 38: Bestätigungsschritt
- 40: Bearbeitungseinheit
- 42: Haushaltsgerät
- 44: Aufforderungsschritt
- 46: Bearbeitungsschritt
- 48: Warteschritt
- 50: Bestätigungsschritt
- 52: Heizschritt
- 54: Aufheizschritt
- 56: Kontrollschritt
- 58: Bestätigungsschritt
- 60: Lebensmittelzugabeschritt
- 62: Aufforderungsschritt
- 64: Detektionsschritt
- 66: Bestätigungsschritt
- 68: Garschritt
- 70: Ausführungsschritt
- 72: Kontrollschritt
- 74: Bestätigungsschritt

## Patentansprüche

1. Lebensmittelzubereitungssystem mit zumindest einer Ausgabeeinheit (12), mit zumindest einem Gargerät, welches die Ausgabeeinheit (12) und eine Steuereinheit (14) wenigstens teilweise aufweist, mit zumindest einem von dem Gargerät verschiedenen Haushaltsgerät (24), welches eine Funktionseinheit (22) wenigstens teilweise aufweist, **dadurch gekennzeichnet, dass** das Haushaltsgerät (24) als eine Waage, eine Knetmaschine, eine Teigmaschine, ein Mixer oder eine Rührmaschine ausgebildet ist, wobei die Steuereinheit (14) dazu vorgesehen ist, über die Ausgabeeinheit (12) durch zumindest ein Rezept zu führen, wobei die Steuereinheit (14) dazu vorgesehen ist, über die Ausgabeeinheit (12) durch zumindest einen Lebensmittelvorbereitungsschritt (16, 18) des Rezepts zu führen, wobei der Lebensmittelvorbereitungsschritt (16, 18) ein Rezeptschritt ist, welcher zu einer Vorbereitung eines Lebensmittels und/oder eines Produkts auf eine Garung des Lebensmittels und/oder des Produkts vorgesehen ist, wobei die Steuereinheit (14) dazu vorgesehen ist, in dem Lebensmittelvorbereitungsschritt (16, 18) über die Ausgabeeinheit (12) zu einer Benutzung zumindest der Funktionseinheit (22) aufzufordern, wobei die Funktionseinheit (22) und die Steuereinheit (14) in wenigstens einem Betriebszustand miteinander kommunizieren, und zwar drahtlos, und wobei die Funktionseinheit (22) in wenigstens einem Betriebszustand in wenigstens einem Ergebnisübertragungsschritt ein Ergebnis einer Benutzung der Funktionseinheit (22) an die Steuereinheit (14) übermittelt.

2. Lebensmittelzubereitungssystem nach Anspruch 1, **dadurch gekennzeichnet, dass** die Steuereinheit (14) dazu vorgesehen ist, in wenigstens einem Betriebszustand zumindest eine Bedieneingabe zu einer Bestätigung einer Beendigung zumindest eines Rezeptschritts des Rezepts abzuwarten.

3. Lebensmittelzubereitungssystem nach einem der vorhergehenden Ansprüche,
**dadurch gekennzeichnet, dass** die Steuereinheit (14) dazu vorgesehen ist, zumindest einen Rezeptschritt des Rezepts automatisch durchzuführen.

4. Lebensmittelzubereitungssystem nach einem der vorhergehenden Ansprüche,
**dadurch gekennzeichnet, dass** die Steuereinheit (14) dazu vorgesehen ist, in Abhängigkeit von zumindest einer Bedieneingabe das Rezept zu verändern.

5. Lebensmittelzubereitungssystem nach Anspruch 4, **dadurch gekennzeichnet, dass** die Steuereinheit (14) dazu vorgesehen ist, im Anschluss an eine Beendigung des Rezepts das veränderte Rezept automatisch als neues Rezept zu speichern.

6. Lebensmittelzubereitungssystem nach einem der vorhergehenden Ansprüche,
**dadurch gekennzeichnet, dass** die Steuereinheit (14) dazu vorgesehen ist, in Abhängigkeit von zumindest einer Bedieneingabe zumindest einen Rezeptschritt des Rezepts zu überspringen.

## Claims

1. Food preparation system with at least one output unit (12), with at least one cooking appliance, which at least partially has the output unit (12) and a control unit (14), with at least one household appliance (24) which differs from the cooking appliance and at least partially has a functional unit (22), **characterised in that** the household appliance (24) is embodied as a weighing scale, a kneading machine, a dough machine, a mixer or a stirring machine, wherein the control unit (14) is provided to perform at least one recipe via the output unit (12), wherein the control unit (14) is provided to perform at least one food preparation step (16, 18) of the recipe via the output unit (12), wherein the food preparation step (16, 18) is a recipe step which is provided to prepare a food and/or a product for cooking of the food and/or the product, wherein the control unit (14) is provided, in the food preparation step (16, 18), to request a use at least of the functional unit (22) via the output unit (12), wherein the functional unit (22) and the control unit (14) communicate with one another in at least one operating state, specifically in a wireless manner, and wherein the functional unit (22), in at least one operating state, transmits a result of a use of the functional unit (22) to the control unit (14) in at least one result transfer step.

2. Food preparation system according to claim 1, **characterised in that** the control unit (14) is provided, in at least one operating state, to wait for at least one operator input for confirming a completion of at least one recipe step of the recipe.

3. Food preparation system according to one of the preceding claims, **characterised in that** the control unit (14) is provided to perform at least one recipe step of the recipe automatically.

4. Food preparation system according to one of the preceding claims, **characterised in that** the control unit (14) is provided to modify the recipe as a function of at least one operator input.

5. Food preparation system according to claim 4, **characterised in that** the control unit (14) is provided to store the modified recipe as a new recipe automatically, following completion of the recipe.

6. Food preparation system according to one of the preceding claims, **characterised in that** the control unit (14) is provided to skip at least one recipe step of the recipe as a function of at least one operator input.

## Revendications

1. Système de préparation d'aliment comprenant au moins une unité de sortie (12), au moins un appareil de cuisson, qui comprend au moins en partie l'unité de sortie (12) et une unité de commande (14), et au moins un appareil ménager (24) différent de l'appareil de cuisson, lequel comprend au moins en partie une unité fonctionnelle (22),
**caractérisé en ce que** l'appareil ménager (24) est constitué sous forme d'une balance, d'un malaxeur, d'une mélangeuse, d'un mixeur ou d'un batteur,
dans lequel l'unité de commande (14) est configurée pour guider tout au long d'au moins une recette par l'intermédiaire de l'unité de sortie (12),
l'unité de commande (14) est configurée pour guider tout au long d'au moins une étape de préparation d'aliments (16, 18) de la recette par l'intermédiaire de l'unité de sortie (12), l'étape de préparation d'aliments (16, 18) étant une étape de recette, qui est conçue pour préparer un aliment et/ou un produit pour la cuisson de l'aliment et/ou du produit,
dans lequel l'unité de commande (14) est configurée pour solliciter, par l'intermédiaire de l'unité de sortie (12), une utilisation d'au moins l'unité fonctionnelle (22) dans l'étape de préparation d'aliment (16, 18),
l'unité fonctionnelle (22) et l'unité de commande (14) communiquent l'une avec l'autre, dans au moins un état de fonctionnement, précisément sans fil, et l'unité fonctionnelle (22), dans au moins un état de fonctionnement, transmet, dans au moins une étape de transmission de résultat, un résultat d'une utilisation de l'unité fonctionnelle (22) à l'unité de commande (14).

2. Système de préparation d'aliment selon la revendication 1, **caractérisé en ce que** l'unité de commande (14) est configurée pour, dans au moins un état de fonctionnement, attendre au moins une entrée de commande pour valider la fin d'au moins une étape de recette de la recette.

3. Système de préparation d'aliment selon l'une des revendications précédentes, **caractérisé en ce que** l'unité de commande (14) est configurée pour exécuter automatiquement au moins une étape de recette de la recette.

4. Système de préparation d'aliment selon l'une des revendications précédentes, **caractérisé en ce que** l'unité de commande (14) est configurée pour modifier la recette en fonction d'au moins une entrée de commande.

5. Système de préparation d'aliment selon la revendication 4, **caractérisé en ce que** l'unité de commande (14) est configurée pour enregistrer automatiquement la recette modifiée en tant que nouvelle recette après la fin de la recette.

6. Système de préparation d'aliment selon l'une des revendications précédentes, **caractérisé en ce que** l'unité de commande (14) est configurée pour sauter au moins une étape de recette de la recette en fonction d'au moins une entrée de commande.
